# EUROPÄISCHE PATENTSCHRIFT

(11) **EP 1 041 197 B1**
(45) Veröffentlichungstag und Bekanntmachung des Hinweises auf die Patenterteilung: **04.02.2004**
(21) Anmeldenummer: 00105582.1
(22) Anmeldetag: 16.03.2000
(51) Int. Cl.: D21G 1/02

(54) **Walze, insbesondere zum Glätten von Papierbahnen, sowie Verfahren zur Herstellung einer solchen Walze**
Roll, in particular for smoothing paper webs, and process for making such a roll
Rouleau, en particulier pour le lissage de bandes de papier, et procédé pour la fabrication d' un tel rouleau

(30) Priorität: 31.03.1999 DE 19914709
(43) Veröffentlichungstag der Anmeldung: 04.10.2000
(73) Patentinhaber: Voith Paper Patent GmbH, 89522 Heidenheim (DE)
(72) Erfinder: Sohl, Carsten, 7000 Fredericia Dänemark (DK)
(74) Vertreter: Manitz, Finsterwald & Partner GbR

(56) Entgegenhaltungen:
- DE-A- 19 736 575
- DE-C- 4 312 827
- US-A- 3 490 119

## Beschreibung

Die vorliegende Erfindung betrifft ein Verfahren zum Herstellen einer elastischen Walze gemäß dem Oberbegriff des Anspruchs 1. Weiterhin ist die Erfindung auf eine Walze nach dem Oberbegriff des Anspruchs 6 gerichtet.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Durch die Elastizität dieser zweiten Walze wird somit eine zu starke Verdichtung der Papierbahn verhindert, die zu einem speckigen Aussehen der Papierbahn führen würde. Die Größenordnung der Walzen liegt bei Längen von 6 bis 12 m bzw. Durchmessern von 800 bis 1500 mm. Sie halten Linienkräften bis zu 600 N/mm und Druckspannungen bis 50 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Biegewechselfrequenz erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der. Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittliche Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Aus der US 3,490,119 A ist eine Walze mit einem metallischen Walzenkern und einer aus mehreren Faserlagen bestehenden Bezugsschicht bekannt. Die Fasern der einzelnen Faserlagen sind dabei jeweils gegengleich zueinander auf den Walzenkern gewickelt.

Aus der DE 197 36 575 A ist eine Walze mit einem aus Kunstharz bestehenden Walzenkörper bekannt. In den Walzenkörper sind einander überkreuzende Lagen aus synthetischen Fasern eingebettet, wobei für aufeinander folgende Faserlagen die Winkellagen der Fasern jeweils alternierend sehr steil und anschließend sehr flach ausgebildet sind.

Es ist eine Aufgabe der vorliegenden Erfindung ein Verfahren zur Herstellung einer elastischen Walze der eingangs genannten Art sowie eine entsprechende Walze anzugeben, bei der die Gefahr des Auftretens von Hot-Spots bei zumindest gleichbleibenden mechanischen Eigenschaften verringert wird.

Der das Verfahren betreffende Teil dieser Aufgabe, wird erfindungsgemäß ausgehend von einem Verfahren der eingangs genannten Art durch die kennzeichnenden Merkmale des Anspruchs 1 gelöst.

Eine derart hergestellte Walze ist erfindungsgemäß durch die kennzeichnenden Merkmale des Anspruchs 6 gekennzeichnet.

Bei einer derart hergestellten bzw. ausgebildeten Walze ist die Verbindungsschicht so ausgebildet, daß sie eine optimale mechanische, spannungsoptimierte Verbindung zwischen der Metallwalze und der außenliegenden Funktionsschicht bildet. Dadurch ist gewährleistet, daß die Verbindung zwischen der Metallwalze und der Funktionsschicht, bestehend aus der Kontaktfläche zwischen Metallwalze und Verbindungsschicht, der Verbindungsschicht selbst sowie der Kontaktfläche zwischen Verbindungsschicht und Funktionsschicht, an keiner Stelle einer übermäßig hohen Längsspannung ausgesetzt ist, so daß die Gefahr einer Ablösung oder Trennung von Funktionsschicht und Verbindungsschicht und damit eine Bildung von Hot-Spots verringert wird.

Durch die unterschiedlichen Winkellagen der Fasern wird für jede der gewickelten Faserlagen ein unterschiedliches Wärmeausdehnungsverhalten in Längsrichtung der Walze je nach Faserausrichtung erreicht. Dadurch ist es möglich, eine Verbindungsschicht zu erzeugen, deren resultierender Wärmeausdehnungskoeffizient sich in radialer Richtung ändert und insbesondere zunimmt. Während bei der Wicklung der inneren Faserlagen die Winkellagen der Fasern so gewählt werden, daß die aus dem Matrixmateriäl mit eingebetteten Fasern bestehenden Bereiche der Verbindungsschicht einen Wärmeausdehnungskoeffizienten besitzen, der in etwa dem der Metallwalze entspricht, werden die Winkellagen der radial außenliegenden Fasern so gewählt, daß die radial außenliegenden Bereiche der Verbindungsschicht einen Wärmeausdehnungskoeffizienten besitzen, der im wesentlichen dem der Funktionsschicht entspricht.

Da zwischen den einzelnen Faserlagen das elastische Matrixmaterial vorhanden ist, besitzt die Verbindungsschicht eine ausreichende Elastizität in Längsrichtung der Walze, so daß die durch unterschiedliche Ausdehnungen der Metallwalze und der Funktionsschicht auftretenden Spannungen von der Verbindungsschicht aufgenommen werden können.

Die Verbindungsschicht besitzt somit in radialer Richtung einen quasi kontinuierlich variierenden Wärmeausdehnungskoeffizienten, so daß jeweils an den Kontaktflächen zwischen Verbindungsschicht und Metallwalze bzw. zwischen Verbindungsschicht und Funktionsschicht auch bei einer Erwärmung weitgehende Spannungsfreiheit herrscht.

Durch die Zunahme der Winkellage wird gerade erreicht, daß die inneren Bereiche der Verbindungsschicht einen relativ niedrigen, der Metallwalze ähnlichen Ausdehnungskoeffizienten besitzen, während der Wärmeausdehnungskoeffizient der außenliegenden Bereiche der Verbindungsschicht deutlich höher ist und dem Wärmeausdehnungskoeffizienten der Funktionsschicht entspricht. Bevorzugt sind dabei jeweils die Winkellagen zweier aufeinanderfolgender Faserlagen betragsmäßig gleich groß und jeweils nur im Vorzeichen verschieden, während die Winkellagen der sich daran anschließenden nächsten beiden Faserlagen betragsmäßig größer, dabei jedoch untereinander wieder betragsmäßig gleich groß und lediglich im Vorzeichen verschieden sind. Somit vergrößern sich die Winkellagen alle zwei Faserlagen in radialer Richtung nach außen.

Nach einer bevorzugten Ausführungsform der Erfindung werden die Faserbündel zweier unmittelbar aufeinanderfolgender Faserlagen gegengleich gewickelt, das heißt, daß die Winkellagen der Faserbündel zweier unmittelbar aufeinanderfolgender Faserlagen symmetrisch zur Querschnittsfläche der Walze sind. Auf diese Weise wird ein symmetrischer Aufbau der resultierenden Verbindungsschicht geschaffen, was zu einer gleichmäßigen Belastung der Bezugsschicht im Betrieb und dadurch zu einer Verlängerung der Lebensdauer der Walze führt.

Typische Werte für die Winkellage der innenliegenden Faserlagen betragen ca. 30° bis 40°, wobei sich die Winkellage insbesondere in Schritten von ca. 10° bis 20°, bevorzugt von ca. 15° erhöht.

Nach einer vorteilhaften Ausführungsform der Erfindung werden die Faserbündel durch Faserrovings gebildet, wobei ein Roving jeweils aus einer Vielzahl von nebeneinander liegenden Fasern der gleichen Art besteht. Bevorzugt können dabei zum Bilden der Verbindungsschicht gleichzeitig Glasfasern und Kohlefasern auf den Walzenkern gewickelt werden. Dabei ist insbesondere ein Mischungsverhältnis von Glasfasern zu Kohlefasern zwischen ca. 60/40 und ca. 90/10, bevorzugt ca. 70/30 vorteilhaft.

Durch die gleichzeitige Aufbringung bzw. Mischung von Glasfasern und Kohlefasern in dem erfindungsgemäß angegebenen Verhältnis werden deren Eigenschaften optimal miteinander kombiniert. Während Glasfasern einen Wärmeausdehnungskoeffizienten besitzen, der dem von Stahl relativ nahekommt, jedoch eine relativ schlechte Wärmeleitfähigkeit besitzen, ist die Wärmeleitfähigkeit von Kohlefasern sehr hoch. Gleichzeitig besitzen Kohlefasern eine ca. dreimal so hohe Steifigkeit wie Glasfasern.

Durch die in dem erfindungsgemäß angegebenen Mischungsverhältnis aufgebrachten Fasern wird neben einer Erhöhung der Steifigkeit der Verbindungsschicht eine Verbesserung der Wärmeleitfähigkeit innerhalb der Verbindungsschicht erreicht. Diese Verbesserung der Wärmeleitfähigkeit wird insbesondere durch die Kohlefasern erzielt, so daß innerhalb der Verbindungsschicht punktuell entstehende Hitze über die Kohlefasern in axialer Richtung abgeführt werden kann, bevor eine so starke Überhitzung auftritt, daß ein Hot-Spot entsteht.

Das Aufwickeln der Fasern kann grundsätzlich sowohl im Naßwickelverfahren als auch im Trockenwickelverfahren erfolgen. Während beim Naßwickelverfahren die Fasern vor dem Aufwickeln auf den Walzenkern durch das in flüssige Form gebrachte Matrixmaterial gezogen und somit von diesem vollständig umgeben werden, werden im Trockenwickelverfahren die Fasern im wesentlichen trocken auf den Walzenkern aufgewickelt und erst während und nach dem Aufwickeln mit einem weichen Matrixmaterial beaufschlagt, insbesondere vollständig in das Matrixmaterial eingebettet. Als Matrixmaterial wird dabei üblicherweise ein Kunststoff, insbesondere eine Harz/Härter-Kombination verwendet. Das Matrixmaterial kann aus einem Duroplast oder einem Thermoplast bestehen, wobei darauf hingewiesen wird, daß der im Zusammenhang mit dem Matrixmaterial verwendete Begriff "weich" lediglich in Relation zu der als hart bezeichneten Außenseite der Metall-, insbesondere Stahlwalze zu verstehen ist.

Durch die praktisch vollständige Einbettung der Fasern in das Matrixmaterial erhält die Verbindungsschicht die erforderliche Elastizität, wobei das Matrixmaterial gleichzeitig als Verbindungsmaterial zwischen der außenliegenden Funktionsschicht und dem Walzenkern dient. Grundsätzlich ist es jedoch auch möglich, daß zwischen der Metallaußenseite des Walzenkerns und der Verbindungsschicht noch eine zusätzliche Kontaktschicht, beispielsweise eine Klebeschicht vorhanden ist.

Nach einer weiteren vorteilhaften Ausführungsform der Erfindung beträgt der Fasergehalt der Verbindungsschicht ca. 40 bis 70 Vol.-%, insbesondere ca. 50 bis 60 Vol.-%, bevorzugt ca. 55 Vol.-%. Durch den Fasergehalt der Verbindungsschicht wird sowohl deren Steifigkeit, Wärmeleitfähigkeit als auch der Gesamtausdehnungskoeffizient bestimmt. Durch den erfindungsgemäßen Fasergehalt wird gewährleistet, daß die eingangs genannten optimalen mechanischen und thermischen Eigenschaften der Verbindungsschicht eingehalten werden.

Im Gegensatz zu der Verbindungsschicht beträgt der Fasergehalt der Funktionsschicht bevorzugt ca. 5 bis 20 Vol.-%, insbesondere 8 bis 12 Vol.-%. Durch den verringerten Fasergehalt erhält die Funktionsschicht eine geringere Steifigkeit als die Verbindungsschicht, wie sie für die Vergleichsmäßigung und Verdichtung der zu behandelnden Papierbahn bei der Satinage erforderlich ist. Falls durch den reduzierten Fasergehalt der Wärmeausdehnungskoeffizient der Funktionsschicht zu groß wird, kann dieser durch eine entsprechende Zugabe von Füllstoffen in das Matrixmaterial der Funktionsschicht reduziert werden.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben; in diesen zeigen:
- Fig. 1: eine schematische Querschnittdarstellung einer Vorrichtung zum Separieren von Fasern in Rovings,
- Fig. 2: einen Teillängsschnitt durch eine erfindungsgemäß ausgebildete Walze und
- Fig. 3 bis 6: verschiedene Zwischenzustände einer erfindungsgemäß ausgebildeten Walze bei deren Herstellung.

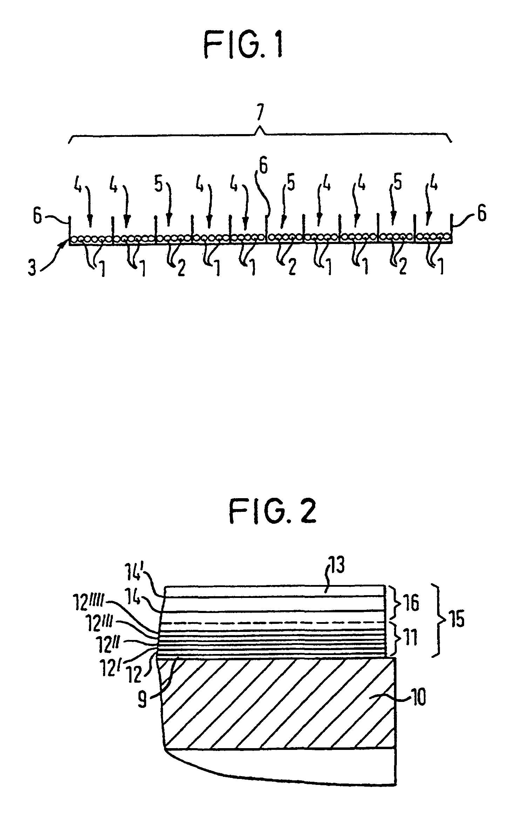

Fig. 1 zeigt eine Vielzahl von im Querschnitt dargestellten Glasfasern 1 und Kohlefasern 2, die durch eine kamm- oder rechenartige Sammeleinheit 3 jeweils zu einschichtigen Faserbündeln, sogenannten Faserrovings 4, 5 zusammengefaßt werden.

Jeweils ein Glasfaserroving 4 bzw. ein Kohlefaserroving 5 ist von dem nächstliegenden Roving 4, 5 durch einen Zahn 6 der Sammeleinheit 3 getrennt, so daß ein eindeutiges Mischungsverhältnis von Glasfasern zu Kohlefasern innerhalb des durch den Glasfaser- und Kohlefaserrovings 4, 5 gebildeten Rovingbandes 7 sowie eine vorgegebene Verteilung von Glasfasern 1 und Kohlefasern 2 entlang der Breite des Rovingsband 7 gewährleistet ist.

Das Mischungsverhältnis zwischen Glas- und Kohlefasern 1, 2 beträgt ca. 70/30, wobei jeder Roving 4, 5 beispielsweise 10000 bis 14000 Einzelfasern 1, 2 mit jeweils einer Dicke von zwischen 0,1 und 0,3mm umfaßt. Das Rovingband 7 umfaßt im vorliegenden Fall zehn Rovings 4, 5, kann jedoch grundsätzlich auch weniger oder mehr Rovings, beispielsweise 8 bis 16 Rovings umfassen.

Während in Fig. 1 die Rovings 4, 5 ideal als einschichtige Lagen dargestellt sind, besteht eine Roving in der Praxis aus einer Vielzahl von Faserlagen, von denen jede Einzelfaser einen Durchmesser von ca. 8 bis 12µm und ein Roving eine Dicke von ca. 0,1 bis 0,3mm, beispielsweise 0,2mm besitzt. Wesentlich ist lediglich, daß die Breite eines Rovings 4, 5 im Verhältnis zur Dicke deutlich größer ist, so daß er annähernd einen einschichtigen Aufbau besitzt.

In Fig. 2 ist ein Teil eines Walzenkerns dargestellt, auf den eine Bezugsschicht 15 aufgebracht ist. Die Bezugsschicht 15 besteht aus einer innenliegenden Verbindungsschicht 11 und einer sich radial nach außen daran anschließenden Funktionsschicht 16. Die Verbindungsschicht sowie die Funktionsschicht 16 bestehen aus einem elastischen Matrixmaterial 9, 13, in das jeweils Rovinglagen 12, 12', 12", 12"', 12"", 14, 14' eingebettet sind. Dabei ist der Abstand der Rovinglagen 12 - 12"" innerhalb der Verbindugsschicht 11 deutlich geringer und dadurch deren Anzahl höher als der der Rovinglagen 14, 14 der Funktionsschicht 16. Der erhöhte Faseranteil innerhalb der Verbindungsschicht 11 bewirkt eine deutliche Verbesserung der Wärmeleitfähigkeit innerhalb dieser Schicht, während der verringerte Faseranteil innerhalb der Funktionsschicht deren erforderliche Elastizität gewährleistet.

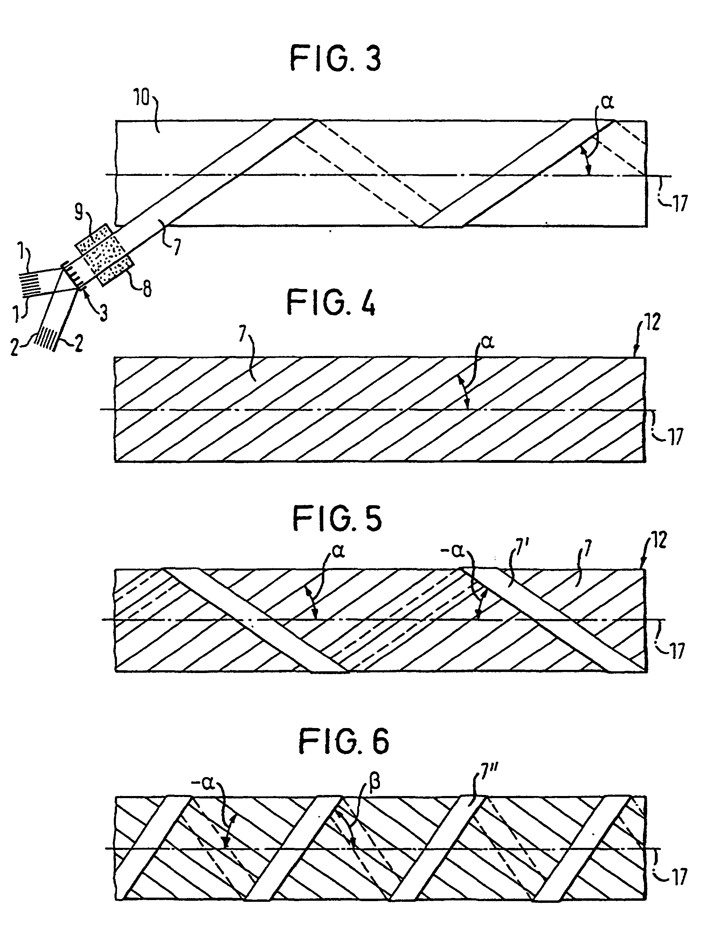

In Fig. 3 ist dargestellt, wie die Glasfasern 1 und die Kohlefasern 2 über die Sammeleinheit 3 geführt und zu dem Rovingband 7 zusammengefaßt werden, woraufhin sie durch eine schematisch dargestellte Imprägniervorrichtung 8 geführt werden. In der Imprägniervorrichtung 8 werden die einzelnen Rovings 4, 5 mit einem flüssigen Matrixmaterial 9 beschichtet, so daß die Rovings 4, 5 im wesentlichen vollständig in dem Matrixmaterial 9 eingebettet sind. Bei dem Matrixmaterial kann es sich dabei um einen Kunststoff, insbesondere um eine Harz/Härter-Kombination handeln.

Das durch die Imprägniervorrichtung 8 vollständig mit dem Matrixmaterial 9 umgebene Rovingband 7 wird auf den Walzenkern 10 schräg aufgewickelt, so daß es einen Winkel α gegenüber der Längsachse 17 des Walzenkerns einschließt. Der Wickelvorgang wird über die gesamte Länge des Walzenkerns 10 durchgeführt, bis an dem nicht dargestellten Ende des Walzenkerns 10 das Rovingband über einen Wickelkern geführt und in der entgegengesetzten Richtung zurückgeführt wird. Bevorzugt wird das Rovingband dabei so geführt, daß es Stoß an Stoß an dem zuvor gewickelten Rovingband 7 anliegt.

Dieser Wickelvorgang wird solange wiederholt, bis der Walzenkern 10 vollständig von dem Rovingband 7 umwickelt ist, so daß sich durch das Rovingband 7 und das das Rovingband 7 umhüllende Matrixmaterial 9 eine geschlossene erste Rovinglage 12 ergibt, deren Fasern alle im wesentlichen den gleichen Winkel α gegenüber der Längsachse des Walzenkerns 10 einschließen, wie es in Fig. 4 dargestellt ist.

Im nächsten Beschichtungsschritt wird ein weiteres Rovingband 7' auf die erste Rovinglage 12 aufgewickelt, wobei das Rovingband 7' in einem Winkel -α gegenüber der Längsachse 17 auf den Walzenkern 10 aufgewickelt wird, bis die erste Rovinglage 12 vollständig von einer weiteren Rovinglage überdeckt ist.

Nach Aufbringen der beiden untersten symmetrischen Rovinglagen 12 wird in dem nächsten Verfahrensschritt ein weiteres Rovingband 7" auf die zweite Rovinglage aufgewickelt, wobei das Rovingband 7" einen Winkel β gegenüber der Längsachse 17 einschließt, der größer ist als der Winkel α. Das Rovingband 7" wird somit steiler gewickelt als das Rovingband 7, wodurch die Ausrichtung der Fasern 1, 2 des Rovingbandes 7" näher zur Umfangsrichtung des Walzenkerns 10 verläuft, während die Ausrichtung der Fasern 1, 2 der Rovingbänder 7, 7' näher zur axialen Richtung verläuft. Durch diese unterschiedlichen Faserausrichtungen erhält die durch die Rovinglagen 7, 7', 7" sowie das Matrixmaterial 9 erzeugte Verbindungsschicht 11 in radialer Richtung unterschiedliche mechanische und thermische Eigenschaften, insbesondere einen unterschiedlichen Wärmeausdehnungskoeffizienten. Durch geeignete Wahl der Winkellagen beim Wickelvorgang kann der Wärmeausdehnungskoeffizienten der Verbindungsschicht 11 so eingestellt werden, daß er im Bereich der Kontaktfläche zu dem Walzenkern 10 in der Größenordnung des Wärmeausdehnungskoeffizientes der Metallwalze liegt, während er an seiner Außenseite, im Bereich der Kontaktfläche zu der radial außenliegenden Funktionsschicht 16 in der Größenordnung deren Ausdehnungskoeffizientes liegt.

Der Wickelvorgang kann mehrere Male mit verschiedenen Winkellagen wiederholt werden, bis eine Verbindungsschicht 11 mit einer Dicke von beispielsweise 3 bis 10mm erzeugt ist. Die Funktionsschicht 16 kann in ähnlicher Weise wie die Verbindungsschicht 11 aufgebaut werden, wobei bei der Bezugsschicht 16 jedoch der Fasergehalt deutlich geringer ist, als bei der Verbindungsschicht 11 und beispielsweise 8 bis 12 Vol.-% beträgt. Auch bei der Funktionsschicht ist es grundsätzlich möglich, die Winkellage der Fasern beim Wickeln zu verändern, um so beispielsweise im radial innenliegenden Bereich der Funktionsschicht 16 deren Wärmeausdehnungskoeffizienten an den Wärmeausdehnungskoeffizienten des radial außenliegenden Bereichs der Verbindungsschicht anzupassen.

Auf diese Weise können die bei eine Erwärmung auftretenden axialen Spannungen zwischen der Verbindungsschicht 11 und der Funktionsschicht 16 weiter reduziert werden.

Durch die in das Matrixmaterial 9 der Verbindungsschicht 11 eingebetteten Glasfasern 1 und Kohlefasern 2 wird erreicht, daß der Temperaturausdehnungskoeffizient der Verbindungsschicht 11 einen Wert erhält, der dem Temperaturausdehnungskoeffizienten des beispielsweise aus Stahl bestehenden Walzenkerns 10 nahekommt. Bei einer im Betrieb auftretenden Temperaturerhöhung wird somit eine in axialer Richtung auftretende Längenausdehnung des Walzenkerns 10 von einer entsprechenden Ausdehnung der Verbindungsschicht 11 begleitet, so daß zwischen dem Walzenkern 10 und der Verbindungsschicht 11 auftretende Längsspannungen in Axialrichtung minimiert werden. Die Funktionsschicht 16, deren Wärmeausdehnungskoeffizient vorwiegend von dem Matrixmaterial 13, d.h. von dem Harz/Härter-Gemisch bestimmt wird, dehnt sich bei.einer entsprechenden Erwärmung zwar deutlich mehr in axialer Richtung aus, die aufgrund der Verbindung zwischen der Funktionsschicht 16, der Verbindungsschicht 11 und dem Walzenkern 10 entstehenden Längsspannungen werden jedoch durch die Elastizität der Verbindungsschicht 11 weitgehend aufgefangen.

Zusätzlich bewirken die in den Rovinglagen 12 und 14 enthaltenen Kohlefasern eine sehr gute axiale Wärmeleitfähigkeit der Verbindungsschicht 11 bzw. der Funktionsschicht 16, so daß die Hitze von eventuell entstehenden Überhitzungspunkten innerhalb der Verbindungsschicht 11 schnell in axialer Richtung abgeleitet werden kann, so daß die Temperatur innerhalb der Verbindungsschicht 11 sowie der Funktionsschicht 16 zuverlässig unterhalb einer kritischen Grenztemperatur bleibt. Das Auftreten von Hot-Spots kann auf die Weise zuverlässig verhindert werden.

### Bezugszeichenliste

- 1: Glasfasern
- 2: Kohlefasern
- 3: Sammeleinheit
- 4: Glasfaserroving
- 5: Kohlefaserroving
- 6: Zähne
- 7, 7' 7": Rovingbänder
- 8: Imprägniervorrichtung
- 9: Matrixmaterial
- 10: Walzenkern
- 11: Verbindungsschicht
- 12, 12' - 12"": Rovinglagen
- 13: Matrixmaterial
- 14: Rovinglagen
- 15: Bezugsschicht
- 16: Funktionsschicht
- 17: Längsachse des Walzenkerns

## Patentansprüche

1. Verfahren zum Herstellen einer elastischen Walze mit einem insbesondere aus Metall bestehenden harten Walzenkern (10) und einer elastischen Bezugsschicht (15), bei dem zum Bilden der Bezugsschicht (15) zunächst eine radial innenliegende Verbindungsschicht (11) auf den Walzenkern (10) und anschließend eine radial außenliegende Funktionsschicht (16) auf die Verbindungsschicht (11) aufgebracht wird, und bei dem zum Bilden der Verbindungsschicht (11) ein aus einer Vielzahl von Fasern (1,2) bestehendes Faserbündel (7,7',7") auf den Walzenkern (10) gewickelt wird, wobei die Wickelrichtung der Fasern (1,2) im wesentlichen parallel zueinander und schräg zur Umfangsrichtung des Walzenkerns (10) verläuft und mehrere Faserlagen (12,12',12",12''',12'''') übereinander gewickelt werden und wobei die durch die Wickelrichtung definierte Winkellage (α,β) zur Längsachse (17) der Walze von Faserbündeln (7,7',7") jeweils aufeinanderfolgender Faserlagen (12) unterschiedlich ist,
**dadurch gekennzeichnet,**
**dass** zur Erhöhung des Wärmeausdehnungskoeffizienten der Verbindungsschicht (11) in einer Richtung radial nach außen die Faserbündel (7,7',7") so gewickelt werden, dass der Betrag der Winkellage (α,β) der Faserbündel (7,7',7") für die einzelnen Faserlagen (12) der Verbindungsschicht (11) radial nach außen zunimmt.

2. Verfahren nach Anspruch 1,
**dadurch gekennzeichnet,**
**daß** die Faserbündel (7,7',7") zweier unmittelbar aufeinanderfolgender Faserlagen (12) gegengleich gewickelt werden, d.h. daß die Winkellagen (α,β) der Fascrbündel (7,7',7") zweier unmittelbar aufeinanderfolgender Faserlagen (12) symmetrisch zur Querschnittsfläche der Walze sind und/oder daß die Winkellage (α) der innenliegenden Faserlagen (12) zwischen ca. 30° und 40° beträgt und/oder daß sich die Winkellage (α,β) in Schritten von ca. 10° bis 20°, insbesondere von ca. 15° erhöht.

3. Verfahren nach Anspruch 1 oder 2,
**dadurch gekennzeichnet,**
**daß** die Faserbündel (7,7'7") durch Faserrovings (4,5) gebildet werden, wobei ein Roving (4,5) jeweils aus einer Vielzahl von nebeneinanderliegenden Fasern (1,2) der gleichen Art besteht und/oder daß als Fasern (1,2) Glas- und/oder Kohlefasern verwendet werden und/oder daß zum Bilden der Verbindungsschicht (11) und/oder der Funktionsschicht (16) gleichzeitig Glasfasern (1) und Kohlefasern (2) auf den Walzenkern (10) gewickelt werden, wobei das Mischungsverhältnis von Glasfasern (1) zu Kohlefasern (2) zwischen ca. 60/40 und ca. 90/10, bevorzugt ca. 70/30 beträgt.

4. Verfahren nach einem der vorhergehenden Ansprüche,
**dadurch gekennzeichnet,**
**daß** beim Wickelvorgang eine Vielzahl von nebeneinander liegenden, aneinander angrenzenden Glasfaser- und Kohlefaserrovings (4,5) zum Bilden einer Rovinglage gleichzeitig auf den Walzenkern (10) aufgewickelt wird.

5. Verfahren nach einem der vorhergehenden Ansprüche,
**dadurch gekennzeichnet,**
**daß** die Glasfasern (1) und Kohlefasern (2) vor dem Aufwickeln auf den Walzenkern (10) mit einem weichen Matrixmaterial (9), insbesondere mit einer Harz/Härter-Kombination umgeben werden, insbesondere durch ein Harz/Härter-Bad gezogen werden, oder daß die Glasfasern (1) und die Kohlefasern (2) im wesentlichen trocken auf den Walzenkern (10) aufgewickelt werden und während oder nach dem Aufwickeln mit einem weichen Matrixmaterial (9), insbesondere mit einer Harz/Härter-Kombination beaufschlagt, insbesondere vollständig in das Matrixmaterial (9) eingebettet werden.

6. Walze, insbesondere zum Glätten von Papierbahnen, mit einem insbesondere aus Metall bestehenden harten Walzenkern (10), der an seiner Außenseite mit einer elastischen Bezugsschicht (15) versehen ist, wobei diese Bezugsschicht (15) eine radial außenliegende Funktionsschicht (16) und eine radial innenliegende Verbindungsschicht (11) zum Verbinden der Funktionsschicht (16) mit dem Walzenkern (10) umfaßt, die innen liegende Verbindungsschicht (11) aus einem weichen Matrixmaterial (9) mit darin eingebetteten, radial übereinanderliegenden Faserlagen (12 - 12"") besteht, die Faserlagen (12 - 12"") jeweils aus schräg zur Längsachse (17) des Walzenkerns (10) gewickelten im wesentlichen parallel zueinander verlaufenden Fasern (1, 2) bestehen und für unterschiedliche Faserlagen (12) die Winkellage (α, β) der Fasern (1, 2) zur Längsachse (17) des Walzenkerns (10) unterschiedlich ist, insbesondere hergestellt gemäß dem Verfahren nach einem der vorhergehenden Ansprüche,
**dadurch gekennzeichnet,**
**dass** zur Erhöhung des Wärmeausdehnungskoeffizienten der Verbindungsschicht (11) in einer Richtung radial nach außen der Betrag der Winkellage (α, β) der Fasern (1, 2) für die einzelnen Faserlagen (12) der Verbindungsschicht (11) radial nach außen zunimmt.

7. Walze nach Anspruch 6,
**dadurch gekennzeichnet,**
**daß** das Matrixmaterial (9) ein Kunststoff, insbesondere ein Duroplast oder ein Thermoplast ist und/oder daß das Matrixmaterial (9) aus einer Harz/Härter-Kombination besteht.

8. Walze nach Anspruch 6 oder 7,
**dadurch gekennzeichnet,**
**daß** die Faserbündel (7, 7') zweier unmittelbar aufeinanderfolgender Faserlagen (12, 12') gegengleich verlaufen, d.h. daß die Winkellagen (α, -α) der Faserbündel (7, 7') zweier unmittelbar aufeinanderfolgender Faserlagen (12, 12') symmetrisch zur Querschnittsfläche der Walze sind und/oder daß die Winkellage (α, β) der Faserbündel (7, 7") für die einzelnen Faserlagen (12, 12") radial nach außen zunimmt und/oder daß die Winkellage (α) der innenliegenden Faserlagen (12) zwischen ca. 30° und 40° beträgt und/oder daß sich die Winkellage (a, β) in Schritten von ca. 10° bis 20°, insbesondere von ca. 15° erhöht.

9. Walze nach einem der Ansprüche 6 bis 8,
**dadurch gekennzeichnet,**
**daß** die Faserbündel als Faserrovings (4, 5) ausgebildet sind, wobei ein Roving (4, 5) jeweils aus einer Anzahl von nebeneinanderliegenden Fasern (1, 2) der gleichen Art besteht, und/oder daß die Fasern (1,2) als Glas- und/oder Kohlefasern ausgebildet sind, wobei insbesondere die innenliegende Verbindungsschicht (11) und/ oder die außenliegende Funktionsschicht (16) aus einer Mischung von Glasfasern (1) und Kohlefasern (2) besteht, die in einem weichen Matrixmaterial (9, 13) eingebettet und im wesentlichen jeweils gleichmäßig über die Länge der Walze verteilt sind, wobei das Mischungsverhältnis von Glasfasern (1) zu Kohlefasern (2) zwischen ca. 60/40 und ca. 90/10, bevorzugt ca. 70/30 beträgt.

10. Walze nach Anspruch 6 bis 9,
**dadurch gekennzeichnet,**
**daß** der Fasergehalt der Verbindungsschicht (11) zwischen ca. 40 bis 70 Vol.-%, insbesondere zwischen ca. 50 bis 60 Vol.-%, bevorzugt ca. 55 Vol.-% beträgt, und/oder daß der Fasergehalt der Funktionsschicht (16) zwischen ca. 5 bis 20 Vol.-%, insbesondere zwischen ca. 8 bis 12 Vol.-% beträgt.

## Claims

1. A method for the manufacture of a resilient roll comprising a hard roll core (10), in particular consisting of metal, and a resilient covering layer (15), in which a radially inwardly disposed connection layer (11) is first applied to the roll core (10) and subsequently a radially outwardly disposed functional layer (16) is applied to the connection layer (11) in order to form the covering layer (15), and in which a fibre bundle (7, 7',7") consisting of a plurality of fibres (1, 2) is wound onto the roll core (10) in order to form the connection layer (11), wherein the winding directions of the fibres (1, 2) extend substantially parallel to one another and obliquely to the peripheral direction of the roll core (10) and a plurality of fibre layers (12, 12', 12", 12'", 12"") are wound on top of one another and wherein the angular positions (α, β) defined by the winding direction with respect to the longitudinal axis (17) of the roll are different for fibre bundles (7, 7', 7") of respectively successive fibre layers (12),
**characterised in that**, in order to increase the coefficient of thermal expansion of the connection layer (11) in a radially outward direction, the fibre bundles (7, 7', 7") are wound such that the magnitude of the angular positions (α, β) of the fibre bundles (7. 7', 7") for the individual fibre layers (12) of the connection layer (11)increases radially outwardly.

2. A method in accordance with claim 1, **characterised in that** the fibre bundles (7, 7', 7") of two fibre layers (12) directly following one another are wound in a diametrically opposed manner, i.e. that the angular positions (α, β) of the fibre bundles (7, 7', 7") of two fibre layers (12) directly following one another are symmetrical to the cross-sectional surface of the roll; and/or **in that** the angular position (α) of the inwardly disposed fibre layers (12) amounts to approximately between 30° and 40°; and/or **in that** the angular position (α, β) increases in steps of approximately 10° to 20°, in particular of approximately 15°.

3. A method in accordance with claim 1 or claim 2, **characterised in that** the fibre bundles (7, 7', 7") are formed by fibre rovings (4, 5), with a roving (4, 5) each consisting of a plurality of fibres (1, 2) of the same type adjoining one another; and/or **in that** glass fibres and/or carbon fibres are used as the fibres (1, 2); and/or **in that** glass fibres (1) and carbon fibres (2) are wound onto the roll core (10) simultaneously in order to form the connection layer (11) and/or the functional layer 16, with the mixing ratio of glass fibres (1) to carbon fibres (2) amounting to between approximately 60/40 and approximately 90/10, preferably to approximately 70/ 30.

4. A method in accordance with any one of the preceding claims, **characterised in that** a plurality of glass fibre rovings (4) and carbon fibre rovings (5) adjoining one another and adjacent to one another are wound onto the roll core (10) simultaneously in the winding process in order to form a roving layer.

5. A method in accordance with any one of the preceding claims, **characterised in that** the glass fibres (1) and the carbon fibres (2) are surrounded with a soft matrix material (9), in particular with a resin/hardener combination, are in particular drawn through a resin/hardener bath, before the winding onto the roll core (10); or **in that** the glass fibres (1) and the carbon fibres (2) are wound onto the roll core (10) substantially dry and have a soft matrix material (9), in particular a resin/hardener combination, applied during or after the winding on, and are in particular completely embedded in the matrix material (9).

6. A roll, in particular for the smoothing of paper webs, comprising a hard roll core (10), in particular consisting of metal, which is provided at its outer side with a resilient covering layer (15), with this covering layer (15) including a radially outwardly disposed functional layer (16) and a radially inwardly disposed connection layer (11) in order to connect the functional layer (16) to the roll core (10), the inwardly disposed connection layer (11) consisting of a soft matrix material (9) with fibre layers (12 - 12"") embedded therein which are disposed radially on top of one another, the fibre layers (12 - 12"") each consisting of fibres (1, 2) wound obliquely to the longitudinal axis (17) of the roll core (10) and extending substantially parallel to one another and the angular positions (α, β) of the fibres (1, 2) with respect to the longitudinal axis (17) of the roll core (10) being different for different fibre layers (12), in particular a roll manufactured in accordance with the method in accordance with any one of the preceding claims,
**characterised in that**, in order to increase the coefficient of thermal expansion of the connection layer (11) in a radially outward direction, the magnitude of the angular position (α, β) of the fibres (1, 2) increases radially outwardly for the individual fibre layers (12) of the connection layer (11).

7. A roll in accordance with claim 6, **characterised in that** the matrix material (9) is a plastic, in particular a thermosetting plastic or a thermoplastic; and/or **in that** the matrix material (9) consists of a resin/hardener combination.

8. A roll in accordance with claim 6 or claim 7, **characterised in that** the fibre bundles (7, 7') of two fibre layers (12) directly following one another extend with mirror symmetry, i.e. that the angular positions (α,-α) of the fibre bundles (7, 7') of two fibre layers (12, 12') directly following one another are symmetrical to the cross-sectional surface of the roll; and/ or **in that** the angular position (α, β) of the fibre bundles (7, 7') for the individual fibre layers (12, 12") increases radially outwardly; and/or **in that** the angular position (α) of the inwardly disposed fibre layers (12) amounts to approximately 30° and 40°; and/or **in that** the angular positions (α, β) increases in steps of approximately 10° to 20°, in particular of approximately 15°.

9. A roll in accordance with any one of claims 6 to 8, **characterised in that** the fibre bundles are formed as fibre rovings (4, 5), with a roving (4, 5) each consisting of a plurality of fibres (1, 2) of the same type adjoining one another; and/or **in that** the fibres (1, 2) are formed as glass fibres and/or carbon fibres; with in particular the inwardly disposed connection layer (11) and/or the outwardly disposed functional layer (16) consisting of a mixture of glass fibres (1) and carbon fibres (2) which are embedded in a soft matrix material (9, 13) and are substantially each uniformly distributed over the length of the roll, with the mixing ratio of glass fibres (1) to carbon fibres (2) amounting to between approximately 60/40 and approximately 90/10, preferably to approximately 70/30.

10. A roll in accordance with claim 6 to 9, **characterised in that** the fibre content of the connection layer (11) amounts to between approximately 40 to 70 percent by volume, in particular to between approximately 50 to 60 percent by volume, preferably to approximately 55 percent by volume; and/or **in that** the fibre content of the functional layer (16) amounts to approximately 5 to 20 percent by volume, in particular to between approximately 8 to 12 percent by volume.

## Revendications

1. Procédé destiné à la fabrication d'un cylindre élastique, comportant un noyau de cylindre dur (10) constitué notamment de métal et une couche de revêtement élastique (15), dans lequel une couche de liaison (11) située radialement à l'intérieur est appliquée dans un premier temps sur le noyau de cylindre (10) pour la réalisation de la couche de revêtement (15), et ensuite une couche de fonction (16) située radialement à l'extérieur est appliquée sur la couche de liaison (11), et dans lequel un faisceau (7, 7', 7'') de fibres constitué d'une pluralité de fibres (1, 2) est enroulé sur le noyau de cylindre (10) pour la réalisation de la couche de liaison (11), le sens d'enroulement des fibres (1, 2) se déroulant pour l'essentiel parallèlement et obliquement par rapport à la direction périphérique du noyau de cylindre (10), plusieurs couches (12, 12' , 12", 12"', 12"") de fibres étant enroulées les unes sur les autres, et la position angulaire (α, β) par rapport à l'axe longitudinal (17) du cylindre, définie par le sens d'enroulement, de faisceaux (7, 7', 7 ") de fibres de couches (12) successives de fibres, étant à chaque fois différente,
**caractérisé en ce que**,
pour l'augmentation du coefficient de dilatation thermique de la couche de liaison (11) dans un sens orienté radialement vers l'extérieur, les faisceaux (7, 7', 7'') de fibres sont enroulés de telle sorte que la valeur de la position angulaire (α, β) des faisceaux (7, 7', 7 ") de fibres des différentes couches (12) de fibres de la couche de liaison (11) augmente radialement vers l'extérieur.

2. Procédé selon la revendication 1,
**caractérisé en ce que**
les faisceaux (7, 7', 7'') de fibres de deux couches (12) de fibres se succédant directement sont enroulés diamétralement à l'opposé, ce qui signifie que les positions angulaires (α, β) des faisceaux (7, 7', 7 ") de fibres de deux couches (12) de fibres se succédant directement sont symétriques par rapport à la surface en section transversale du cylindre, et/ou **en ce que** la position angulaire (α) des couches (12) de fibres situées à l'intérieur est comprise entre environ 30° et 40°, et/ou **en ce que** la position angulaire (α, β) augmente par pas de l'ordre de 10° à 20°, notamment de l'ordre de 15° environ.

3. Procédé selon la revendication 1 ou 2,
**caractérisé en ce que**
les faisceaux (7, 7', 7 ") de fibres sont constitués de stratifils (4, 5) de fibres, un stratifil (4, 5) étant à chaque fois constitué d'une pluralité de fibres (1, 2) de même nature situées côte à côte, et/ou **en ce que** des fibres de verre et/ou de carbone sont utilisées en tant que fibres (1, 2), et/ou **en ce que**, pour la réalisation de la couche de liaison (11) et/ou de la couche de fonction (16), des fibres de verre (1) et des fibres de carbone (2) sont enroulées simultanément sur le noyau de cylindre (10), le rapport de mélange des fibres de verre (1) aux fibres de carbone (2) étant compris entre environ 60/40 et environ 90/10, et étant de préférence de l'ordre de 70/30.

4. Procédé selon l'une quelconque des revendications précédentes,
**caractérisé en ce que**,
lors du processus d'enroulement, une pluralité de stratifils (4, 5) de fibres de verre et de fibres de carbone situées côte à côte et adjacentes les unes aux autres, est enroulée simultanément sur le noyau de cylindre (10) afin de former une couche de stratifils.

5. Procédé selon l'une quelconque des revendications précédentes,
**caractérisé en ce que**
avant l'enroulement sur le noyau de cylindre (10), les fibres de verre (1) et les fibres de carbone (2) sont entourées d'un matériau de matrice mou (9), notamment d'une combinaison de résine / durcisseur, elles sont en particulier tirées à travers un bain de résine / durcisseur, ou **en ce que** les fibres de verre (1) et les fibres de carbone (2) sont enroulées à l'état sensiblement sec sur le noyau de cylindre (10), et sont entourées pendant ou après l'enroulement d'un matériau de matrice mou (9), notamment d'une combinaison de résine / durcisseur, et sont en particulier complètement incorporées dans le matériau de matrice (9).

6. Cylindre destiné notamment au lissage de bandes de papier, comportant un noyau de cylindre dur (10) constitué notamment de métal, qui est muni sur sa face extérieure d'une couche de revêtement élastique (15), cette couche de revêtement (15) englobant une couche de fonction (16) située radialement à l'extérieur et une couche de liaison (11) située radialement à l'intérieur pour la liaison de la couche de fonction (16) avec le noyau de cylindre (10), la couche de liaison (11) située à l'intérieur étant constituée d'un matériau de matrice mou (9) dans lequel sont incorporées des couches (12 à 12'''') de fibres radialement superposées, les couches (12 à 12'''') de fibres étant constituées de fibres (1, 2) s'étendant pour l'essentiel parallèlement les unes par rapport aux autres, qui sont enroulées obliquement par rapport à l'axe longitudinal (17) du noyau de cylindre (10), et la position angulaire (α, β) des fibres (1, 2) de différentes couches (12) de fibres étant différente par rapport à l'axe longitudinal (17) du noyau de cylindre (10), fabriqué notamment d'après le procédé selon l'une quelconque des revendications précédentes,
**caractérisé en ce que**
pour l'augmentation du coefficient de dilatation thermique de la couche de liaison (11) dans un sens orienté radialement vers l'extérieur, la valeur de la position angulaire (α, β) des fibres (1, 2) des différentes couches (12) de fibres de la couche de liaison (11) augmente radialement vers l'extérieur.

7. Cylindre selon la revendication 6,
**caractérisé en ce que**
le matériau de matrice (9) est une matière plastique, notamment une résine thermodurcissable ou une matière thermoplastique, et/ou **en ce que** le matériau de matrice (9) est constitué d'une combinaison de résine / durcisseur.

8. Cylindre selon la revendication 6 ou 7,
**caractérisé en ce que**
les faisceaux (7, 7') de fibres de deux couches (12, 12') de fibres se succédant directement s'étendent de façon diamétralement opposée, ce qui signifie que les positions angulaires (α, - α) des faisceaux (7, 7') de fibres de deux couches (12, 12') de fibres se succédant directement sont symétriques par rapport à la surface en section transversale du cylindre, et/ou **en ce que** la position angulaire (α, β) des faisceaux (7, 7'') de fibres des différentes couches (12, 12'') de fibres augmente radialement vers l'extérieur, et/ou **en ce que** la position angulaire (α) des couches (12) de fibres situées à l'intérieur est comprise entre environ 30° et 40°, et/ou **en ce que** la position angulaire (α, β) augmente par pas de l'ordre de 10° à 20°, notamment de l'ordre de 15°.

9. Cylindre. selon l'une quelconque des revendications 6 à 8,
**caractérisé en ce que**
les faisceaux de fibres sont agencés sous la forme de stratifils (4, 5) de fibres, un stratifil (4, 5) étant à chaque fois constitué d'un nombre de fibres (1, 2) de même nature situées côte à côte, et/ou **en ce que** les fibres (1, 2) sont constituées de fibres de verre et/ou de carbone, la couche de liaison (11) située à l'intérieur et/ou la couche de fonction (16) située à l'extérieur étant notamment constituées d'un mélange de fibres de verre (1) et de fibres de carbone (2) qui sont incorporées dans un matériau de matrice mou (9, 13), et qui sont sensiblement réparties de façon homogène sur la longueur du cylindre, le rapport de mélange des fibres de verre (1) aux fibres de carbone (2) étant compris entre environ 60/40 et environ 90/10, et étant de préférence de l'ordre de 70/30.

10. Cylindre selon l'une quelconque des revendications 6 à 9,
**caractérisé en ce que**
la teneur en fibres de la couche de liaison (11) est comprise entre environ 40 et 70 % en volume, notamment entre environ 50 et 60 % en volume, et est de préférence de l'ordre de 55 % en volume, et/ou **en ce que** la teneur en fibres de la couche de fonction (16) est comprise entre environ 5 et 20 % en volume, notamment entre environ 8 et 12 % en volume.
